Europäisches Patentamt

(19) European Patent Office

Office européen des brevets

(11) Publication number : **0 538 168 A1**

(12) **EUROPEAN PATENT APPLICATION**

(21) Application number : **92500073.9**

(22) Date of filing : **12.06.92**

(51) Int. Cl.$^5$ : **C22B 7/02**, C22B 1/06, C22B 3/06, C22B 11/08

(30) Priority : **14.06.91 ES 9101431**
**11.06.92 ES 9201221**

(43) Date of publication of application :
**21.04.93 Bulletin 93/16**

(84) Designated Contracting States :
**AT BE CH DE DK FR GB GR IT LI LU MC NL PT SE**

(71) Applicant : **RIOTINTO MINERA S.A.**
**C/ Profesor Garcia Gonzalez S/N**
**E-41012 Sevilla (ES)**

(71) Applicant : **Romero Aleta, Rafael**
**C/ Profesor Garcia Gonzalez S/N**
**E-41012 Sevilla (ES)**

(71) Applicant : **Rodriguez Lopez, Jose E.**
**C/ Profesor Garcia Gonzalez S/N**
**E-41012 Sevilla (ES)**

(71) Applicant : **Carranza Mora, Francisco**
**C/ Profesor Garcia Gonzalez S/N**
**E-41012 Sevilla (ES)**

(71) Applicant : **Herrada Delgado, Jose R.**
**C/ Profesor Garcia Gonzalez S/N**
**E-41012 Sevilla (ES)**

(72) Inventor : **Carranza Mora, Francisco**
**C/ Mar Jonico, No.9 410008**
**Sevilla (ES)**
Inventor : **Romero Aleta, Rafael**
**C/ Macarena, No.2. pta. 2**
**41960 Gines (Sevilla) (ES)**
Inventor : **Herrada Delgado, Jose R.**
**C/ Ciudad de Picasent, No. 4 - ptas. 23**
**41007 Sevilla (ES)**
Inventor : **Rodriguez Lopez, Jose E.**
**c/ Gran Via, No. 44**
**21410 Isla Cristina (Huelva) (ES)**

(74) Representative : **Alonso Langle, Emilio**
**Naciones, 12, 3 piso B**
**E-28006 Madrid (ES)**

(54) **Process for the recovery of non ferrous metal values from pyrite cinders.**

(57)    A process for the recovery of non ferrous metal values from pyrite cinders comprising the steps of :
a) previous reroasting of the pyrite cinders
b) leaching of the reroasted cinders followed by the recovery of copper and zinc from the leaching liquor
c) washing of the leached residue with water
d) aeration of said leached and washed residue
e) cyanidation of the aerated residue for the recovery of gold and silver.
According to the process, the following extraction rates can be achieved :
— 80%-90% for copper and zinc
— 80%-85% for gold and 50% for silver.

EP 0 538 168 A1

## TECHNICAL FIELD

The present invention relates to a process for the extraction of Cu, Zn, Au and Ag from pyrite cinders obtained from the roasting of pyrite, said process comprising the steps of reroasting the pyrite cinders, leaching and cyanidating. Copper and zinc are recovered from the leaching liquor by solvent extraction and electrolysis while gold and silver are obtained by cementation with zinc from the cyanidating liquor.

## BACKGROUND ART

Presently, the most part of the spanish pyrites are still roasted for the production of sulphuric acid, thereby generating a large amount of solid residues, called pyrite cinders, which cause serious environmental contamination problems. Such way of pyrite processing leads to a loss in the potential benefit derived from the mineral, since the metals contained in it are not recovered. Therefore, processes should be developed for enabling the use of pyrite cinders as an ore for Fe, Cu, Zn, Ag and Au.

The known processes for the treatment of pyrite are:
- Chlorinating roasting, consisting in roasting the cinders with 10% ClNa at 600°C followed by acid leaching (see "Notes on the treatment of pyrite cinders at the plant of the pyrites in Wilmington, Delaware; R. TRUMBULL, W. HARDIEK, E. LAWFORD; Trans. Ins. Min. Met. 58, 1949).
- L.D.K. process, thought as an alternative to chlorinating roasting in which ClNa is substituted by chlorine. The extraction rates for Au and Ag achieved by this method are very high, more or less 90% (see "Aprovechamiento de cenizas de pirita por cloruración volatilizante"; H. PIETSCH, H. WALDEN; Metal. CENIM. Vol.6, n° 5, 490-500, 1970).

All these processes have the disadvantage of their high operation costs due to the high temperatures and large reagents consumption and involve environmental problems because of the corrosive reagents used therein. In addition, all these processes focus in the obtention of products suitable for the steel industry and cannot be used with the spanish pyrites for its high As and other non ferrous metals content.

The typical composition of a spanish pyrite cinder is indicated in Table 1:

```
Cu..........................0.6-0.72%

Zn..........................2.5%

Pb..........................1.1%

As..........................0.18%

S...........................1.98-2.2%

Fe..........................57%

S(sulphate)...............0.94%

Au..........................0.8-1 g/ton

Ag..........................38-40 g/ton
```

For the recovery of copper and zinc from the mineral, heap leaching or pulp leaching can be used (see "Recuperacion de Cu y Zn de cenizas de pirita. Influencia del tiempo de tostación"; F. CARRANZA, R. ROMERO and E. DIAZ; Ing. Quim.,20, 235, 293-297, 1988).

Au and Ag were recovered by double step cyanidation thereby achieving 90% extraction rate for Au and 40% for Ag (see "Recuperacion de Au y Ag a partir de cenizas de pirita. Tratamientos previos y cianuracion en doble etapa"; F. CARRANZA, R. ROMERO and E. DIAZ; Metal. CENIM, 24, 6, 391-401, 1988).

The main problems arising when using these processes were the low copper and zinc extraction rates, the precipitation of Au and Ag and the large consumption of NaCN and NaOH.

2

## BRIEF DESCRIPTION OF THE INVENTION

The present invention overcomes the mentioned problems by introducing in the process a previous reroasting step of the pyrite cinders, said reroasting being carried out by steps consisting of:
- combustion of the sulphide residues present in the cinders and
- sulphation of oxides and ferrites present in the pyrite cinders.

Thereby, the three cyanide consuming agents (sulphide, copper and zinc) which negatively interfere the cyanidation step are eliminated, while at the same time high extraction rates for copper and zinc in the leaching step are achieved and the need of a cleaning process for the reroasting exhausting gases is avoided. The reroasting process can be carried out by discontinuous operation, the combustion and sulphation steps mentioned above in that case being consecutive, or by continuous operation which implies that the reroasting steps will be simultaneous. The reroasting furnaces can be of several types, like fixed bed furnaces (muffle furnaces for example) or moving bed furnaces (rotatory, fluid bed furnaces etc.).

The roasting process can be carried out with the addition of external sulphating agents like sulphur dioxide or pyrite. The roasting gas must contain oxygen and can be pure oxygen, oxygen enriched air or simply air.

The process lasts from 0.5 to 3 hours at a temperature comprised between 500°C and 800°C.

## BRIEF DESCRIPTION OF THE DRAWINGS

Figure 1 is a flow sheet of the process of the invention.

Figures 2 and 3 illustrate the mass balances in the leaching and cyanidation step respectively.

## DETAILED DESCRIPTION OF THE INVENTION

Pyrite cinders with an average composition as indicated in table 1 contain three different chemical compounds with different solubilities: sulphates, oxides and sulphides. Sulphates are water-soluble, while oxides are soluble in weak acid solutions. On the other hand, sulphides are highly insoluble, requiring for their solubilization a previous oxidation. In addition, most of the non ferrous metal values present in the cinders appear as sulphides. Therefore, previous extraction of Cu and Zn becomes important for two reasons:
- economical recovery of both metals.
- avoiding the cyanide consuming effect (specially from Cu), for increasing the extraction rates during cyanidation while consuming less reagents.

The process of the invention solves the previously indicated problems by burning the residual sulphides present in the cinders, thereby transforming them into their corresponding soluble sulphates. This operation consisting in heating and burning the pyrite cinders at 500-800°C, for transforming the non ferrous metal sulphides into sulphates, thereby improving leachability of the cinders, is what the inventors call "reroasting".

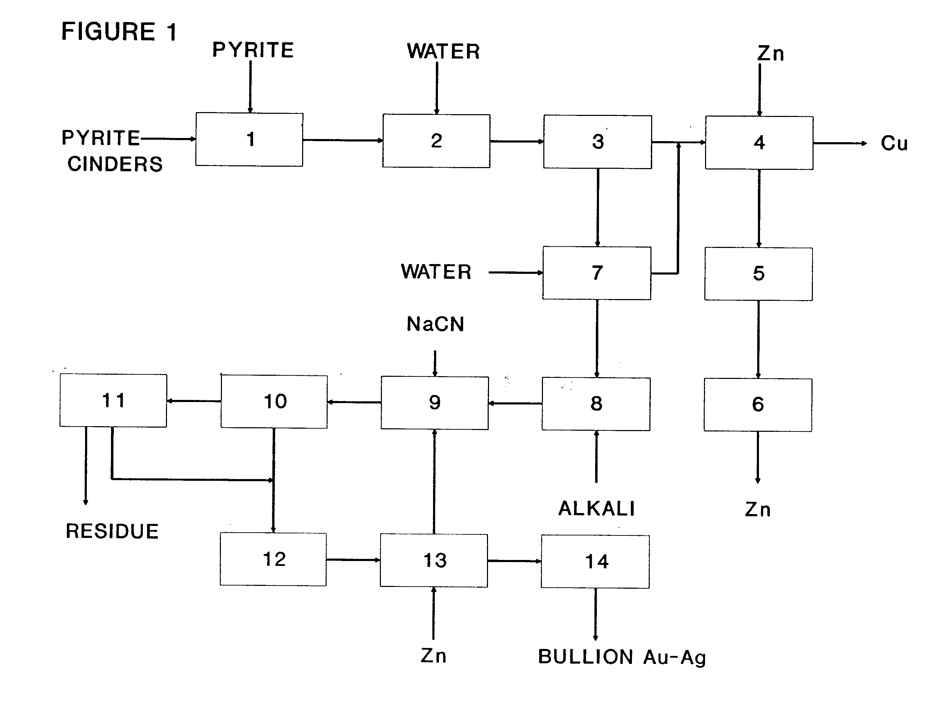

Figure 1 illustrates the flow sheet of the process of the invention. As it can be seen in said Figure 1, pyrite cinders are first introduced into a reroasting furnace. In the reroasting step, the previously dried cinders are initially heated from 80°C to 400°C. A certain loss in sulphates initially present in the cinders has been noticed during the heating, said loss being difficult to avoid not even introducing sulphur dioxide. In order to facilitate possible oxidation of sulphides present in the cinders at temperatures under 400°C, oxygen is introduced into the process at a flow of 273 ml/min. At the beginning, an increase of the exhaust gas flow is detected reaching 750 ml/min. Afterwards this flow decreases due to water condensation on the cinders. 15 minutes after starting the heating, the maximum exhaust gas flow is reached (800 ml/min) and some intermittent pressure changes are detected. These changes are caused by the presence of a certain amount of $SO_2$ which appears due to the partial oxidation of an external sulphur film deposited on the cinders. This external sulphur film is originated by the slow oxidation of sulphide residues in the cinders, which finally creates a sulphur vapor atmosphere that impregnates the cinders. When the amount of $SO_2$ in the exhaust gas is 20%, the exhaust gas flow decreases, thus indicating that sulphation is starting.

In the combustion step, the following reactions take place:

$$3S_2Fe + 8O_2 ----- Fe_3O_4 + 6SO_2$$
$$3SFe + 5O_2 ----- Fe_3O_4 + 3SO_2$$
$$4Fe_3O_4 + O_2 ----- 6Fe_2O_3$$
$$2SMe + 3O_2 ----- 2MeO + 2SO_2$$

Temperature increases from 450°C up to 650°C, which is the most appropriate for the sulphation step. The high oxygen requirements during the combustion are fulfilled by increasing the flow of the reroasting gas from 550 ml/min up to 1310 ml/min. A decrease in the exhaust gas flow means that the oxygen retaining reactions for the formation of sulphates are starting inmediately after the formation of the oxides.

The end of the combustion step is indicated by an increase in the exhaust gas flow and by the temperature reaching 650°C; the oxygen flow is then decreased while the amount of $SO_2$ is increased in order to reach the conditions for sulphation , but always maintaining excess $O^2$ for possible marginal oxidation reactions.

In the sulphation step of reroasting, the characteristic reactions are:

$$2MeO + O^2 + 2SO_2 ----- 2MeSO_4$$
$$2Fe_2O_3 + 3O_2 + 6SO_2 ----- 2Fe_2(SO_4)_3$$

These reactions are partially initiated at the end of the combustion. By increasing the reroasting gas flow to the furnace while maintaining the $SO_2/O_2$ ratio (440 ml/min $SO_2$ and 370 ml/min $O_2$), less sulphation time was necessary for achieving high Cu and Zn extraction rates.

Following the flow sheet of Figure 1, the reroasted pyrite cinders are leached in the leaching reactor 2 which is provided with mechanical stirring means. Leaching occurs at a pH in the range from 0 to 7 with or without the addition of a leaching agent (sulphuric acid, ferric sulphate etc.) and at room temperature. Leaching time can last up to several hours, but good results could be expected within only 30 minutes.

After leaching, the reroasted cinders pass through a solid-liquid separator 3 where a copper and zinc enriched liquor and a residue are obtained. Cu and Zn are recovered by known processes like cementation 4, solvent extraction 5 and electrolysis 6. The solid residue exiting separator 3 passes through washing 7 for cleaning the pulp from cyanide consuming agents (copper concentration should be less than 20 ppm) and for recovering the maximum amount of copper and zinc retained in the leached pulp. The washed pulp goes trough a preaeration-alkalinization step 8 for a period of 2-4 hours, where the pH is increased to a value comprised between 11 and 12.5.

By cyanidation 9 of this pulp, gold and silver are solubilized. NaCN is added in an amount of 100-400 g per 1000 Kg of cinders. Provided aeration and stirring, cyanidation can last up to 24 hours. This operational method allows that pretty high extraction rates (80-85% for Au and 50% for Ag) can be achieved and, in addition, the formation of colloidal precipitates is avoided, thus reducing operational costs in the following step, solid-liquid separation. Alternatively, cyanidation can also be carried out in two steps. Following cyanidation, a gold and silver enriched liquor is obtained in a solid-liquid separator 10. Recovery of gold and silver from the cyanidation liquor is carried out by known processes, like deaeration of the liquor 12, cementation with Zn 13 and finally fusion 14, obtaining a bullion (Au-Ag). After the solid-liquid separator 10, a washing step 11 permits that most of the retained gold and silver can be extracted, being recirculated to the input flow of the deaeration step 12.

As an alternative, the pyrite cinders could be milled before entering the reroasting furnace in order to improve the gold and silver extraction rates.

The following examples illustrate the process of the invention.

## Example 1:

A pyrite cinder sample with the composition indicated in Table 1 was splitted in two identical portions A and B. Portion A was previously reroasted and then leached, while portion B was directly leached without previous roasting.

Portion A was reroasted using air as roasting gas at 600°C during two hours. 3% pyrite was added to the pyrite cinders as external sulphating agent. The leaching of the reroasted .cinders was carried out at room temperature in a reaction vessel provided with stirring means. A sulphuric acid solution with initial pH=1 was the leaching agent. An enriched leaching liquor was obtained after a solid-liquid separation. After repeated washing of the leached pulp followed by recirculation to the leaching liquor, the content in Cu and Zn was determined by atomic absorption spectrometry.

Portion B was directly leached using a ferric sulphate solution.

After 30 minutes the copper extraction rate from portion A was 82% and 85% after 3 hours. In the case of portion B, the copper extraction rate was 14% after 30 minutes. For Zn, the extraction rates at 30 minutes were 85% for portion A and 35% for portion B. This example clearly discloses the advantage of introducing a previous reroasting step in the process for recovering non ferrous metal values from pyrite cinders.

## Example 2:

A pyrite cinders sample like the one used in example 1 was reroasted for 1 hour in a furnace at 600°C with the addition of variable amounts of pyrite. The reroasted cinders were then leached at pH=1 during 2 hours. Copper content in the leaching liquor was then determined as indicated in example 1. The results are indicated in Table 3:

| Test | %pyrite | %Cu extr. |
|------|---------|-----------|
| 1 | 0 | 46.6 |
| 2 | 2 | 79.7 |
| 3 | 3 | 81.5 |
| 4 | 4 | 83.6 |

As it can be seen, the presence of pyrite enhances the extraction of cooper.

**Example 3:**

A pyrite cinders sample with a composition like those of examples 1 and 2 was reroasted during 2 hours at 600°C with 3% pyrite, followed by acid leaching at pH=1 for 30 minutes. After separation of the leaching liquor, the leached pulpwas alkalinized and aerated to a pH between 11 and 12.5. Cyanidation was carried out for 18 hours with NaCN (200 ppm). Au and Ag contents were determined in the cyanidating liquor. The results indicate that after 24 hours, the Au extraction rate is more than 80% and the Ag extraction rate is 45%. When the NaCN concentration was increased from 100 to 300 ppm, the results reveal that when the NaCN concentration increases, the Ag extraction rates do improve (41% with 100 ppm NaCN and 53% with 300 ppm), while the Au extraction rate does not change significantly.

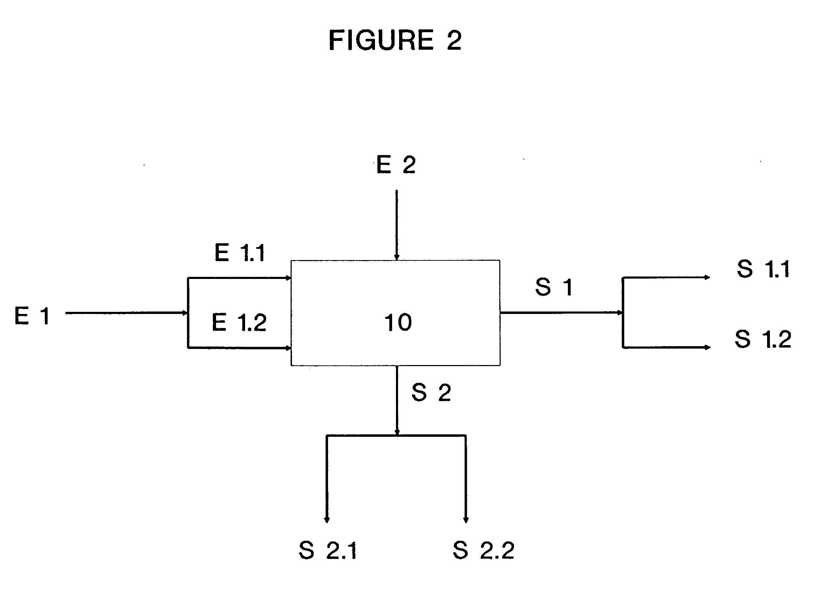

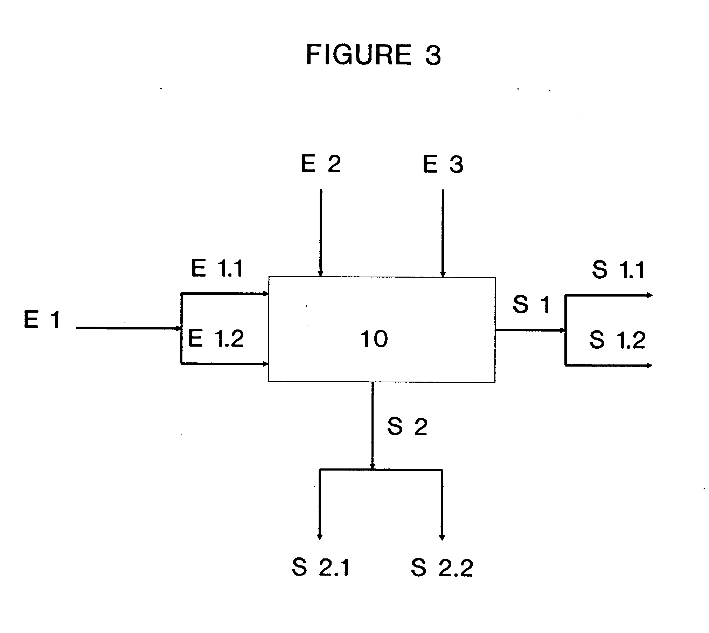

In order to summarize the achieved results and for highlighting the industrial significance of the process of the invention, the mass balances of the leaching (Figure 2) and cyanidating step (Figure 3) are disclosed. Data were obtained after 200 continuous reroastings by 2 Kg batches, thus making a total amount of 400 Kg cinders, using as roasting gas a mixture of oxygen and sulphur dioxide and followed by all the other steps of the process.

In Figure 2 block 10 represents the leaching tank. E1 corresponds to 2422 grams/hour (g/h) of reroasted pyrite cinders, that means a copper input of 18.4 g/h (E1.1) and a Zn input of 53.0 g/h (E1.2). E2 is 9.28 litres/hour (l/h) of leaching agent. Exit flow S1 corresponds to 9.28 l/h of enriched leaching liquor having 16.6 g/h of copper (S1.1) and 46.5 g/h of Zn (S1.2). S2 is a residue containing 1.8 g/h of Cu (S2.1) and 6.5 g/h of Zn (S2.2). This means that from 1000 Kg of pyrite cinders 6.85 Kg Cu and 19.2 Kg Zn could be obtained, which represents 90.2% extraction rate for Cu and 87.7% for Zn.

In Figure 3 block 10 represents the cyanidation reactor. E1 corresponds to 2130 g/hour of pyrite cinders with 0.91 l/h of water. This implies an input of 1.94 mg/h of gold (E1.1) and 91.4 mg/h of silver (E1.2). Flows E2 and E3 correspond to NaOH (2.31 l/h and pH=13.15) and NaCN (0.09 g/l with an initial concentration of 16 g/l). Flow S1 corresponds to 3.31 l/h of a liquor with 1.56 mg/h of Au (S1.1) and 61.6 mg/h of Ag (S1.2). S2 is a residue (2130 g/h) with 0.38 mg/h of Au (S2.1) and 29.8 mg/h of Ag (S2.2).

This means that from 1000 Kg of pyrite cinders 0.68 grams of gold and 26.9 grams of silver could be obtained, which represents 80.3% extraction rate for Au and 67.4% for Ag.

**Claims**

1.- A process for the recovery of non ferrous metal values from pyrite cinders comprising the steps of:
a) previous reroasting of the pyrite cinders
b) leaching of the reroasted pyrite cinders followed by the recovery of copper and zinc from the leaching liquor
c) washing of the leached residue with water
d) preaeration of said leached and washed residue
e) cyanidation of the preaerated residue for the recovery of gold and silver
characterized in that said previous reroasting is carried out by steps consisting of:
- combustion of the sulphide residues present in the cinders
- sulphation of oxides and ferrites present in the cinders.

2.- A process for the recovery of non ferrous metal values from pyrite cinders according to claim 1, characterized in that the previous reroasting is carried out by consecutive steps.

3.- A process for the recovery of non ferrous metal values from pyrite cinders according to claim 1, characterized in that the previous reroasting is carried out by simultaneous steps.

4.- A process according to claims 1 and 3, characterized in that the previous reroasting is carried out in a moving bed furnace.

5.- A process according to claims 1,2,3 and 4, characterized in that the reroasting gas contains oxygen.

6.- A process according to claims 1,2,3,4 and 5, characterizedby the addition of an external sulphating agent in the reroasting step.

7.- A process according to claim 6, characterized by the addition of sulphur dioxide to the roasting gas as external sulphating agent.

8.- A process according to claim 6, characterized by the addition of pyrite to the pyrite cinder as external sulphating agent.

9.- A process according to claim 8, characterized by the addition of floated pyrite to the pyrite cinders in an amount comprised between 0.75% and 4% by weight.

10.- A process according to claim 8, characterized by the addition of coarse pyrite to the pyrite cinders in an amount comprised between 0.75% and 4% by weight.

11.- A process according to the previous claims, charecterized in that the reroasting step takes place at a temperature comprised between 500°C and 800°C.

12.- A process according to the previous claims, characterized in that the roasting step lasts from 0.5 to 3 hours.

13.- A process according to claim 1, characterized in that the leaching step occurs at a pH comprised between 0 and 7 and with the addition of a leaching agent.

14.- A process according to claim 1, characterized in that no reagent is added for the leaching step.

FIGURE 1

# FIGURE 2

EP 0 538 168 A1

FIGURE 3

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-4 177 067 (PEPPER ET AL.) 4 December  1979 * claims * | 1,6-8, 11-13 | C22B7/02 C22B1/06 C22B3/06 C22B11/08 |
| Y | NEUE HÜTTE vol. 30, no. 4, April 1985, pages 143 – 145 LENCHEV ET AL. 'Der sulfatisierende Röstprozeâ von vorbehandelten Pyritabbränden' | 1,6-8, 11-13 | |
| A | FR-A-2 478 672 (OUTOKUMPU OY) 25 September 1981 * claims * | 1-3 | |
| A | FR-A-2 066 440 (EMPRESA AUXILIAR DE LA INDUSTRIA S.A.) 6 August 1971 | 5-7,11 | |
| A | DATABASE WPIL Week 22, 1987 Derwent Publications Ltd., London, GB; AN 87-155237 & RO-A-90 744 (INST INGIN TEHN IND & UNITAT METAL NEFEROASA) 29 November 1986 * abstract * | 6-8 | **TECHNICAL FIELDS SEARCHED (Int. Cl.5 )** C22B |
| A | DATABASE WPI Week 25, 1979 Derwent Publications Ltd., London, GB; AN 79-47130B & ZA-A-7 800 688 (ANGLO AMER CORP AFR LTD) 7 February 1979 * abstract * | 11 | |
| A | DE-A-2 146 334 (DUISBURGER KUPFERHÜTTE) 29 March 1973 | | |

-/--

The present search report has been drawn up for all claims

| Place of search | Date of completion of the search | Examiner |
|---|---|---|
| THE HAGUE | 24 FEBRUARY 1993 | WITTBLAD U.A. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P0401)

**European Patent Office**

**EUROPEAN SEARCH REPORT**

Application Number

EP 92 50 0073
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 134 435 (COMPANIA ESPANOLA DE MINAS DE THARSIS S.A.)<br>20 March 1985<br>--- | | |
| A | DATABASE WPIL<br>Week 51, 1981<br>Derwent Publications Ltd., London, GB;<br>AN 81-94472D<br>& SU-A-812 849 (GORKI POLY) 15 March 1981<br>* abstract *<br>------ | | |
| | | | **TECHNICAL FIELDS SEARCHED (Int. Cl.5 )** |

The present search report has been drawn up for all claims

| Place of search | Date of completion of the search | Examiner |
|---|---|---|
| THE HAGUE | 24 FEBRUARY 1993 | WITTBLAD U.A. |